# EUROPEAN PATENT APPLICATION

(11) **EP 4 703 879 A1**
(43) Date of publication of application: **04.03.2026**
(21) Application number: 24795893.7
(22) Date of filing: 15.04.2024
(51) Int. Cl.: G06F 9/50

(54) **TRAINING METHOD, DEVICE AND SYSTEM, AND STORAGE MEDIUM**

(30) Priority: 27.04.2023 CN 202310494610
(71) Applicant: Cloud Intelligence Assets Holding (Singapore) Private Limited, Singapore 189554 (SG)
(72) Inventor: YAN, Tingshuai, Beijing 100102 (CN); HUO, Zhixin, Beijing 100102 (CN); ZHANG, Kai, Beijing 100102 (CN); YI, Li, Beijing 100102 (CN)
(74) Representative: Barker Brettell LLP
(86) International application number: PCT/CN2024/087829
(87) International publication number: WO 2024/222512

(57) **Abstract**

Embodiments of this application provide a training method, a device, a system, and a storage medium. In the training method, a distributed training group executes a training task based on an elastic training framework, so that a worker process of the training task may be run on an instance node of the distributed training group. Because the elastic training framework supports a dynamic change of the worker process of the training task, the training process supports a dynamic quantity change of distributed nodes required for the training. Based on this, when the distributed training group includes a preemptive instance node, elastic scale-out or elastic scale-in may be performed on the training task with reference to states of the preemptive instance node. Further, training may be performed by fully using the preemptive instance, to reduce training costs while enabling the training task to automatically perform scale-out or scale-in instead of terminating, thereby facilitating improvement of training quality and training efficiency.

## Description

This application claims priority to Chinese Patent Application No. 202310494610.0, filed with the China National Intellectual Property Administration on April 27, 2023 and entitled "TRAINING METHOD, DEVICE, SYSTEM, AND STORAGE MEDIUM", which is incorporated herein by reference in its entirety.

### TECHNICAL FIELD

This application relates to the field of cloud computing technologies, and in particular, to a training method, device, a system, and a storage medium.

### BACKGROUND

With the development of artificial intelligence (Al), AI models are increasingly large, causing rising training costs of AI works. Currently, an existing method for executing a training task is based on a preemptive instance (also referred to as a spot instance). The preemptive instance is an on-demand instance provided by a cloud computing platform, and has a discount price relative to a non-preemptive on-demand instance. Performing AI model training based on a preemptive instance can reduce instance costs of AI training tasks.

The preemptive instance, although bringing a significant cost reduction, also brings a problem of instability. The preemptive instance may be reclaimed due to fluctuation of prices or insufficient inventories. Consequently, the AI training work run on the preemptive instance may be abnormally terminated. Therefore, how to reduce training costs while ensuring training quality is a technical problem that needs to be resolved urgently.

### SUMMARY

At least one aspect of this application provides a training method, a device, a system, and a storage medium, to reduce training costs while ensuring training quality.

An embodiment of this application provides a training method, including: receiving a training task, and obtaining a work type corresponding to the training task; scheduling the training task to a distributed training group corresponding to the work type to perform training, where the distributed training group is used to execute the training task based on an elastic training framework corresponding to the work type, and the distributed training group includes at least one preemptive instance node in a resource pool; and controlling the distributed training group to perform elastic scale-out or elastic scale-in on the training task based on a use state of the at least one preemptive instance node and/or availability of preemptive instance resources in the resource pool.

Optionally, the performing elastic scale-in on the training task in the distributed training group based on a use state of the at least one preemptive instance node and/or availability of preemptive instance resources in the resource pool includes: triggering the distributed training group to perform elastic scale-in if a first node in the at least one preemptive instance node is updated to an unavailable state, to re-allocate the training task based on remaining available nodes in the distributed training group.

Optionally, the method further includes: determining whether to restart a worker process on the first node based on preset training configuration information; and if so, restarting the worker process, and setting the worker process to a pending state; and the controlling the distributed training group to perform elastic scale-out on the training task based on a use state of the at least one preemptive instance node and/or availability of preemptive instance resources in the resource pool includes: adding a second node to the distributed training group, to recover the worker process from the pending state to a running state; and triggering the distributed training group to perform elastic scale-out, so that the worker process is run on the added second node.

Optionally, the adding a second node to the distributed training group includes: determining whether a preemptive instance resource matching a preset resource preemption policy exists in the resource pool; if so, creating a preemptive instance node in the resource pool as the second node; and adding the second node to the distributed training group.

Optionally, the method further includes: creating at least one on-demand instance node in the resource pool as the second node based on a training task amount of the worker process if the preemptive instance resource matching the preset resource preemption policy does not exist in the resource pool; and adding the second node to the distributed training group.

Optionally, the controlling the distributed training group to perform elastic scale-out on the training task based on a use state of the at least one preemptive instance node and/or availability of preemptive instance resources in the resource pool includes: creating a third node in the resource pool if the preemptive instance resources in the resource pool satisfy a preset resource preemption policy, where the third node is a preemptive instance node; and adding the third node to the distributed training group, and triggering the distributed training group to perform elastic scale-out, to re-allocate the training task based on the distributed training group added with the node.

Optionally, the method further includes: monitoring a reclaim event of the preemptive instance nodes in the resource pool; and determining, if it is monitored that any preemptive instance node in the resource pool is reclaimed, that a use state of the preemptive instance node is an unavailable state.

An embodiment of this application further provides a training system, including an elastic training control component, a scheduling decision maker, an elastic scale-out and scale-in component, and a distributed training group, where the distributed training group includes at least one preemptive instance node in a resource pool; and the elastic training control component is configured to: receive a training task, and obtain a work type corresponding to the training task; schedule the training task to a distributed training group corresponding to the work type by using the scheduling decision maker, so that the distributed training group executes the training task based on an elastic training framework corresponding to the work type; and control, by using the elastic scale-out and scale-in component, the distributed training group to perform elastic scale-out or elastic scale-in on the training task based on a use state of the at least one preemptive instance node and/or availability of preemptive instance resources in the resource pool.

An embodiment of this application further provides a server, including a memory and a processor, where the memory is configured to store one or more computer instructions; and the processor is configured to execute the one or more computer instructions to perform the steps in the method provided in the embodiments of this application.

An embodiment of this application further provides a computer-readable storage medium storing a computer program. The computer program, when executed by a processor, can implement the steps in the method provided in the embodiments of this application.

In the embodiments of this application, the distributed training group executes the training task based on the elastic training framework, so that the worker process of the training task may be run on the instance node of the distributed training group. Because the elastic training framework supports a dynamic change of the worker process of the training task, the training process supports a dynamic quantity change of distributed nodes required for the training. Based on this, when the distributed training group includes a preemptive instance node, elastic scale-out or elastic scale-in may be performed on the training task with reference to states of the preemptive instance node. Further, training may be performed by fully using the preemptive instance, to reduce training costs while enabling the training task to automatically perform scale-out or scale-in instead of terminating, thereby facilitating improvement of training quality and training efficiency.

### BRIEF DESCRIPTION OF DRAWINGS

Drawings described herein are used to provide a further understanding of this application, which constitutes a part of this application. Exemplary embodiments of this application and descriptions thereof are used to explain this application, and do not constitute any inappropriate limitation on this application. The drawings are as follows.
FIG. 1 is a schematic structural diagram of a training system according to an exemplary embodiment of this application.
FIG. 2 is a schematic structural diagram of an elastic training control component according to an exemplary embodiment of this application.
FIG. 3 is a schematic flowchart of elastic scale-out and scale-in according to an exemplary embodiment of this application.
FIG. 4 is a schematic flowchart of a training method according to an exemplary embodiment of this application.
FIG. 5 is a schematic structural diagram of a server according to an exemplary embodiment of this application.

### DESCRIPTION OF EMBODIMENTS

To make objectives, technical solutions, and advantages of this application clearer, the technical solutions of this application are clearly and completely described below with reference to specific embodiments of this application and drawings. Apparently, the described embodiments are only some embodiments rather than all embodiments of this application. All other embodiments obtained by a person of ordinary skill in the art based on the embodiments of this application without creative efforts shall fall within the protection scope of this application.

Terms used in the embodiments of the present invention are merely used for illustrating specific embodiments, and are not intended to limit the present invention. Terms "a", "the", and "said" in a singular form used in the embodiments and the appended claims of the present invention are also intended to include a plural form, unless otherwise specified in the context clearly. A term "at least one" generally includes at least two, but does not exclude a situation of including at least one.

It should be understood that a term "and/or" used herein describes only an association relationship for describing associated objects and represents that three relationships may exist. For example, A and/or B may represent the following three cases: only A exists, both A and B exist, and only B exists. In addition, a character "/" herein generally indicates an "or" relationship between the associated objects.

It should be further noted that a term "comprise", "include", or any other variant is intended to encompass non-exclusive inclusion, such that a commodity or a system including a series of elements not only includes those elements, but also includes other elements not listed explicitly, or further includes intrinsic elements of the commodity or the system. Without more limitations, an element defined by a statement "include a/an..." does not exclude additional same elements existing in the commodity or the system that includes the element.

In a solution of performing training based on a preemptive instance, when a user submits a training task, training by using a preemptive instance resource may be specified to perform preemptive instance training. In this solution, when a preemptive instance is to be reclaimed, a training state may be saved. When a price or an inventory of the preemptive instance meets a requirement set by the user again, the training task may be automatically re-pulled to complete the training task. However, in this solution, in case of limited preemption resources, the training task of the user still cannot be executed, resulting in decreased training efficiency.

To resolve a technical problem in the related art that training costs and training quality cannot be both ensured, some embodiments of this application provide a solution. Technical solutions provided in the embodiments of this application are described in detail below with reference to the drawings.

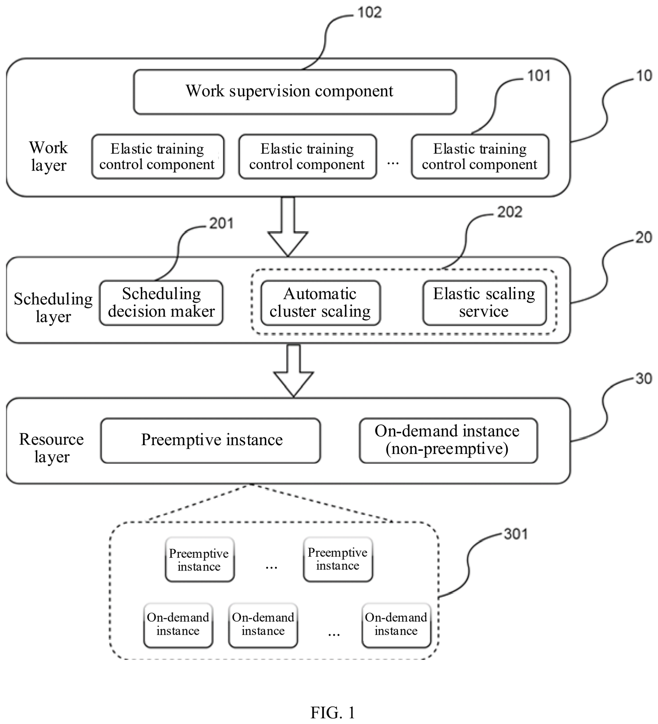

FIG. 1 is a schematic structural diagram of a training system according to an exemplary embodiment of this application. The training system may be deployed on a container cluster. As shown in FIG. 1, the training system includes a work layer 10, a scheduling layer 20, and a resource layer 30.

The work layer 10 includes at least one elastic training control component 101. Different elastic training control components correspond to different work types.

The scheduling layer 20 includes a scheduling decision maker 201 and an elastic scale-out and scale-in component 202. The elastic scale-out component 202 may include an automatic cluster scaling service and an elastic scaling service shown in FIG. 1.

The resource layer 30 is configured to provide a resource pool. The resource pool may provide preemptive instance resources and non-preemptive on demand instance resources. An on-demand instance is an elastic container instance that is created based on a specification and a demand of a user and for which payment is performed. A preemptive instance is an on-demand instance, which needs to be created in a bidding manner, and may be dynamically reclaimed. A price of the preemptive instance may be lower than a price of a non-preemptive on-demand instance. For the non-preemptive on-demand instance, a life cycle is determined based on a purchase duration of a user. To simplify description and facilitate distinguishing, except for special descriptions, an on-demand instance described in the following embodiments is a non-preemptive on-demand instance. An instance node may be created based on a resource provided by the resource layer 30, and a distributed training group, for example, a distributed training group 301 shown in FIG. 1, is created based on the instance node. One distributed training group may include at least one instance node, and one instance node corresponds to one elastic container instance. In this embodiment, to reduce training costs, one distributed training group may include at least one preemptive instance node.

Any distributed training group is used to execute a training task based on an elastic training framework. The elastic training framework refers to a distributed training framework that supports a dynamic quantity change of worker processes participating in training. The elastic training framework is deployed on the instance node of the distributed training group, to implement elastic distributed training based on computing resources provided by the distributed training group. The elastic training framework usually includes a control (or referred to as driver) process and a worker process. The control process may be run on an instance node of a central processing unit (CPU) type, and the worker process may be run on an instance node of a CPU or graphics processing unit (GPU) type. In an elastic distributed training framework, a worker process is mainly configured to execute an allocated training task. The control process is mainly configured to allocate a task to an available worker process, and detect, in real time, whether an existing worker process changes, for example, detect whether a process is offline. The control process may be further configured to: detect, in real time by using a monitor, whether a host changes, and if a new host joins, generate a new worker process on the new host, and construct a new communication ring by using the new worker process and the original worker process. In this embodiment, a host for deploying the elastic training framework is provided by an instance node in the resource pool. That is, control and worker execution of the elastic training framework are run on the instance node. The instance node may include at least one of a preemptive instance node or an on-demand instance node.

Based on the foregoing training system, a low-cost and high-quality AI training service can be provided for a user. Exemplary descriptions are provided below.

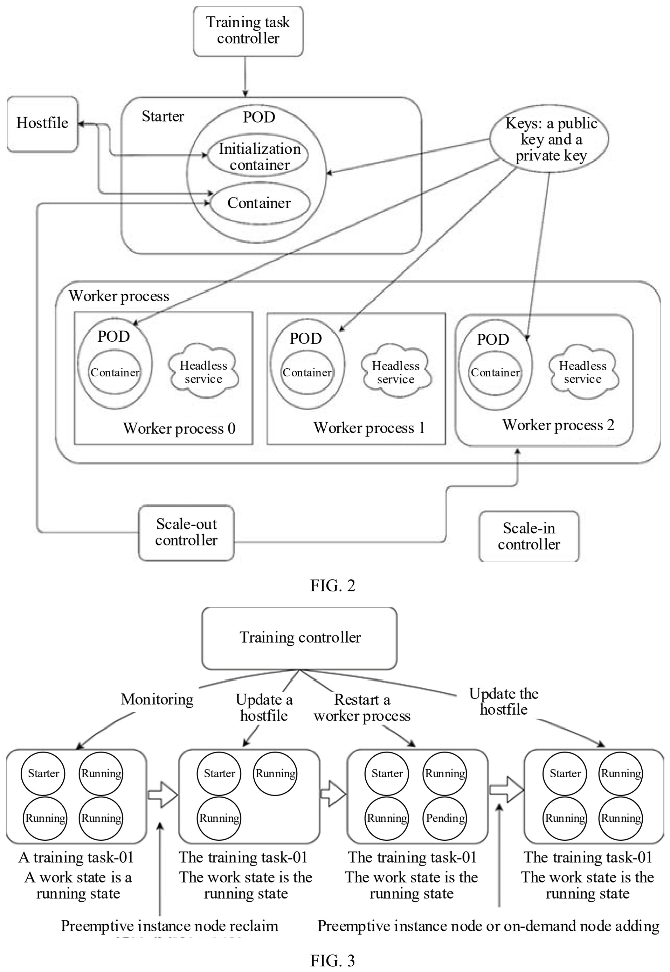

FIG. 2 exemplarily describes a structure of the elastic training control component. The elastic training control component is mainly configured to control, through monitoring and management, a resource managed by the elastic training control component. As shown in FIG. 2, the elastic training control component includes a group of training controllers, that is, a training task controller, a scale-in controller, and a scale-out controller.

The scale-in controller is configured to manage a life cycle of a training task. The scale-in controller and the scale-out controller are configured to manage elastic scaling of a training task. The elastic scaling of a training task includes elastic scale-out of a training task and elastic scale-in of a training task. The elastic scale-out refers to starting a worker process of a training task on more instance nodes. That is, more instance nodes are used to execute a training task, to increase a quantity of resources used to execute the training task, thereby improving training efficiency of the training task. The elastic scale-in refers to ending a worker process of a deployed training task in one or more instance nodes, to reduce a quantity of resources used for executing the training task. The training task may be divided into at least one sub-task, and any worker thread may perform one or more sub-tasks of the training task. Performing elastic scale-out on the training task means increasing a quantity of instance nodes of a worker thread used for running the training task; and performing elastic scale-in on the training task means reducing a quantity of instance nodes of a worker thread used for running the training task. Therefore, the elastic training framework supports a dynamic quantity change of worker threads, while the training task can tolerate reclaim of preemptive instance resources, thereby improving training quality while reducing training costs.

A starter shown in FIG. 2 is configured to create a container (an application container), to obtain an elastic container instance. As shown in FIG. 2, the starter is configured to start one or more initialization containers before creating an application container in a POD (a smallest deployable unit in a container engine), to complete initialization and verification operations of a preset condition required for the application container. When the elastic container instance is reclaimed or created, the starter may update a hostfile, to trigger elastic scale-out and scale-in operations for the training task. As shown in FIG. 2, at least one worker process of the elastic training framework may be run on the distributed training group, and any worker process is run in the container of the POD, and is configured as a headless service to facilitate external searching. Keys (a public key and a private key) shown in FIG. 2 are used for performing login authentication on a user of the container, to improve use security of the container. The scale-out component may create a new elastic container instance by using the starter, and start a worker process of the training task on the new elastic instance, to implement elastic scale-out of the training task.

In some embodiments, the resource layer 30 may include at least one different distributed training group. The different distributed training groups may perform different types of training tasks based on a same elastic training framework or different elastic training frameworks. In the training system, any elastic training control component 101 is configured to receive a training task, obtain a work type corresponding to the training task, and schedule, by using the scheduling decision maker 201, the training task to a distributed training group corresponding to the work type to perform training. The distributed training group is used to execute the training task based on an elastic training framework corresponding to the work type.

During the training, the elastic training control component 101 may control, by using the elastic scale-out and scale-in component 202, the distributed training group to perform elastic scale-out or elastic scale-in on the training task based on a use state of the at least one preemptive instance node in the distributed training group and/or availability of preemptive instance resources in the resource pool. The availability of the preemptive instance resources in the resource pool means that the preemptive instance resources in the resource pool satisfy a preset resource preemption policy. The preset resource preemption policy may be used for describing at least one of an instance type, an instance specification, a region, an availability zone, or a bidding price. For example, when a preemptive instance resource of a type in the resource pool satisfies an instance specification requirement of a user, has a sufficient inventory, and has a price less than a bidding price set by the user, it is determined that the preemptive instance resource has availability.

A use state of any node includes an available state or an unavailable state. For an on-demand instance node, a use state thereof is the available state since creation of the on-demand instance node. If a life cycle of the on-demand instance node ends, the use state thereof is the unavailable state. For a preemptive instance node, when a preemptive instance node is created because of satisfying a bidding price of a user, the preemptive instance node is in the available state. When a preemptive instance node is reclaimed due to a price fluctuation or an insufficient inventory, the preemptive instance node is in the unavailable state.

In some embodiments, when a use state of a preemptive instance node or an on-demand instance node in the distributed training group is the unavailable state, the elastic training control component 101 may control, by using the elastic scale-out and scale-in component 202, the distributed training group to perform elastic scale-in on the training task. During elastic scale-in, a worker process of the training task that is being run may be ended on the instance node that is in the unavailable state, to remove the training task from the instance node.

In some other embodiments, after the elastic scale-in, if an available preemptive instance resource exists in the resource pool, the elastic training control component 101 may control, by using the elastic scale-out and scale-in component 202, the distributed training group to perform elastic scale-out on the training task. During elastic scale-out, a preemptive instance node may be created based on an available preemptive instance resource, and a worker process of the training task is started on the preemptive instance node, to deploy the training task to the preemptive instance node.

In some still other embodiments, when the elastic scale-in is not performed, if an available preemptive instance resource exists in the resource pool, the elastic training control component 101 may control, by using the elastic scale-out and scale-in component 202, the distributed training group to perform elastic scale-in on the training task, to add more preemptive instance nodes having low costs to the distributed training group.

Optionally, use states of the preemptive instance nodes in the foregoing embodiments may be monitored by a work supervision component 102 on the work layer 10, as shown in FIG. 1. The work supervision component 102 may provide an in-time termination capability, a notification release capability, an observation capability, a failover capability, a fail tolerance capability, and a horizontal scaleout capability for the training task. The observation capability for the training task is a capability of the work supervision component 102 in detecting a running state of the training task, to provide feedback information to a user in time. The failover capability for the training task is a capability of the work supervision component 102 in re-pulling, after partial worker processes of the training task end abnormally, the worker processes and further executing the training task. The fail tolerance capability for the training task is a capability of the work supervision component 102 in recovering, after partial nodes of the training task are faulty, the training task on the faulty nodes.

In this embodiment, the work supervision component 102 is mainly configured to: monitor a reclaim event of the preemptive instance nodes in the resource pool; and determine, if it is monitored that any preemptive instance node in the resource pool is reclaimed, that a use state of the preemptive instance node is the unavailable state. Further, when any preemptive instance node in the distributed training group is reclaimed, the work supervision component 102 may trigger the elastic training control component 101 to perform elastic scale-in on the training task.

In this embodiment, the distributed training group executes the training task based on the elastic training framework, so that the worker process of the training task may be run on the instance node of the distributed training group. Because the elastic training framework supports a dynamic change of the worker process of the training task, the training process supports a dynamic quantity change of distributed nodes required for the training. Based on this, when the distributed training group includes a preemptive instance node, elastic scale-out or elastic scale-in may be performed on the training task with reference to states of the preemptive instance node. Further, training may be performed by fully using the preemptive instance, to reduce training costs while enabling the training task to automatically perform scale-out or scale-in instead of terminating, thereby facilitating improvement of training quality and training efficiency.

Elastic scale-in or elastic scale-out of the training task is exemplified by using an example in which any preemptive instance node (for example, a first node) in the distributed training group is reclaimed.

In some exemplary embodiments, if at least one preemptive instance node, e.g., the first node, included in the distributed training group is updated to the unavailable state, the elastic training control component may trigger the distributed training group to perform elastic scale-in, to re-allocate the training task based on remaining available nodes in the distributed training group. In this implementation, the elastic training control component may monitor a change of a worker process that is run on the distributed training group. After the first node is reclaimed, a worker process on the first node is deleted. After it is monitored that the worker process is deleted, the elastic training control component may update a hostfile of the elastic training framework, and a control process that is run on the distributed training group may sense, by reading the hostfile, a situation that the worker process goes offline, and may start an elastic scale-in procedure, to re-allocate the training task based on a remaining worker process. During the elastic scale-in, the control process may notify the remaining worker process to restart, and reestablish the distributed training group based on the restarted worker process.

Optionally, after the first node is reclaimed, the elastic training control component may determine whether to restart the worker process on the first node based on preset training configuration information. The training configuration information may be set by a user. When submitting the training task, the user may submit the training configuration information together. The configuration information may be used for configuring at least one of a node quantity threshold (including a quantity threshold upper limit and/or a quantity threshold lower limit) required for the training task, a resource preemption policy, an on-demand resource supplementation policy, and a processing policy after a preemptive instance resource is reclaimed. The processing policy after a preemptive instance resource is reclaimed may include: ending a process on the preemptive instance resource or restarting the process on the preemptive instance resource.

If the elastic training control component determines, based on the processing policy after a preemptive instance resource is reclaimed, to restart the worker process on the first node after the first node is reclaimed, the worker process may be set to a pending state. In this case, the elastic training control component may supplement the distributed training group with a new node based on resource availability in the resource pool and an on-demand resource supplementation policy configured by the user. That is, the elastic training control component may re-perform the elastic scale-out on the training task after performing the elastic scale-in on the training task, to supplement computing power.

Optionally, when controlling the distributed training group to perform elastic scale-out on the training task, the elastic training control component may add a second node to the distributed training group, recover the worker process on the first node from the pending state to a running state, and trigger the distributed training group to perform elastic scale-out, so that the worker process is run on the added second node.

In this implementation, after the worker process is recovered to the running state, the elastic training control component may monitor a change of the worker process, and update the hostfile of the elastic training framework, and the control process that is run on the distributed training group may sense, by reading the hostfile, a situation that the worker process goes online again, and may start an elastic scale-out procedure, to re-allocate the training task based on the worker process after the scale-out. During the elastic scale-out, the control process may notify the added worker process and an original remaining worker process to restart, so that the added worker process joins the distributed training group.

The second node may be a preemptive instance node determined based on a preemptive instance resource preemption policy and resource availability in the resource pool, or may be an on-demand instance node determined based on the on-demand resource supplementation policy configured by the user. Exemplary descriptions are respectively provided below.

In some optional embodiments, the elastic training control component may determine whether a preemptive instance resource matching a preset resource preemption policy exists in the resource pool; and if so, create a preemptive instance node in the resource pool as the second node, and add the second node to the distributed training group. The resource preemption policy may be used for describing at least one of an instance type, an instance specification, a region, an availability zone, or a bidding price. The elastic training control component may monitor whether an available preemptive instance resource exists in the resource pool based on the resource preemption policy. During configuration of a resource preemption policy, at least one different instance type, at least one different region, and at least one different availability zone may be configured, to improve preemption resource availability.

Optionally, if the preemptive instance resource matching the preset resource preemption policy does not exist in the resource pool, the elastic training control component may create at least one on-demand instance node in the resource pool as the second node based on a training task amount of the worker process on the reclaimed first node, and add the second node to the distributed training group.

Further exemplary descriptions are provided below with reference to FIG. 3. As shown in FIG. 3, a training task-01 is deployed on a distributed training group, and is in a running state. The distributed training group includes a starter process and three worker processes that are run. When a preemptive instance node in the distributed training group is reclaimed, the node is in the unavailable state, and correspondingly, a worker process on the node is deleted. As shown in FIG. 3, the elastic training control component may trigger the distributed training group to perform elastic scale-in by updating the hostfile. In this case, a work state of the training task is still the running state. As shown in FIG. 3, if the deleted process needs to be restarted, the elastic training control component may restart the worker process, and set the worker process to a pending state. In this case, the work state of the training task is the running state. When a preemptive instance node or an on-demand instance node is added to the distributed training group, as shown in FIG. 3, the elastic training control component may re-update the hostfile, to trigger the distributed training group to perform elastic scale-out. Therefore, the worker process in the pending state is recovered to the running state. In this case, the work state of the training task is still the running state.

In this implementation, on one hand, on-demand instances may be automatically supplemented when there is a preemptive instance deficiency, to improve availability of the training task, and on the other hand, on-demand instance nodes are created based on the training task amount, facilitating instance supplementation based on a training requirement, thereby reducing training costs.

The foregoing embodiments record elastic scale-in after a preemptive instance node in the distributed training group is reclaimed and elastic scale-out after the elastic scale-in. In some optional embodiments, if no node is reclaimed in the distributed training group, elastic scale-out may be performed based on available preemptive instance resources. Exemplary descriptions are provided below.

Optionally, when controlling, based on a use state of a node in the distributed training group, the distributed training group to perform elastic scale-out on the training task, the elastic training control component may create a preemptive instance node in the resource pool as the third node when preemptive instance resources in the resource pool satisfy a preset resource preemption policy. The elastic training control component may add the third node to the distributed training group, and trigger the distributed training group to perform elastic scale-out, to re-allocate the training task based on the distributed training group added with the node.

Based on this implementation, when no node is reclaimed in the distributed training group, elastic scale-out is performed based on available preemptive instance resources in the resource pool, so that a training computing power can be improved with relatively low training costs, thereby improving training quality and training efficiency.

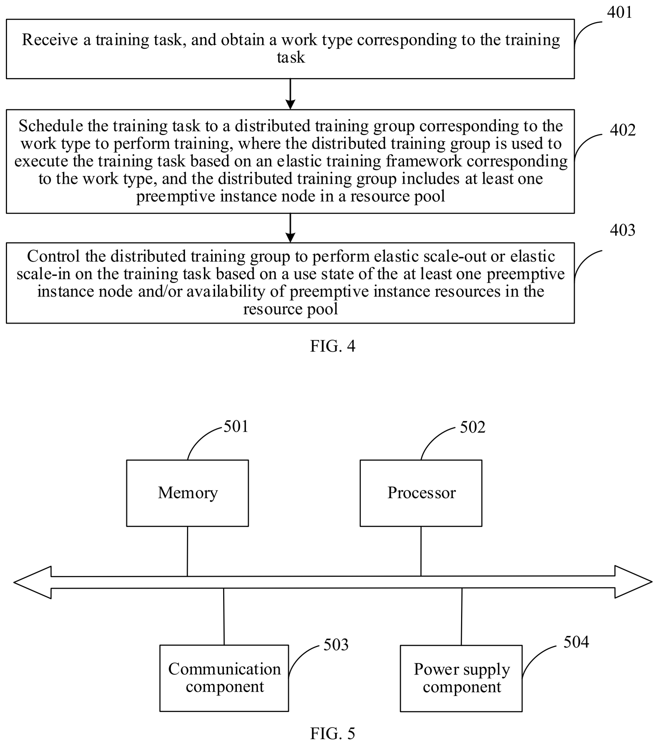

FIG. 4 is a schematic flowchart of a training method according to an exemplary embodiment of this application. The method may include the following steps shown in FIG. 4.

Step 401: receive a training task, and obtain a work type corresponding to the training task.

Step 402: schedule the training task to a distributed training group corresponding to the work type to perform training, where the distributed training group is used to execute the training task based on an elastic training framework corresponding to the work type, and the distributed training group includes at least one preemptive instance node in a resource pool.

Step 403: control the distributed training group to perform elastic scale-out or elastic scale-in on the training task based on a use state of the at least one preemptive instance node and/or availability of preemptive instance resources in the resource pool.

In some exemplary embodiments, a manner of the performing elastic scale-in on the training task in the distributed training group based on a use state of the at least one preemptive instance node and/or availability of preemptive instance resources in the resource pool includes: triggering the distributed training group to perform elastic scale-in if a first node in the at least one preemptive instance node is updated to an unavailable state, to re-allocate the training task based on remaining available nodes in the distributed training group.

In some exemplary embodiments, the method further includes: determining whether to restart a worker process on the first node based on preset training configuration information; and if so, restarting the worker process, and setting the worker process to a pending state. Correspondingly, a manner of the controlling the distributed training group to perform elastic scale-out on the training task based on a use state of the at least one preemptive instance node and/or availability of preemptive instance resources in the resource pool includes: adding a second node to the distributed training group, to recover the worker process from the pending state to a running state; and triggering the distributed training group to perform elastic scale-out, so that the worker process is run on the added second node.

In some exemplary embodiments, a manner of the adding a second node to the distributed training group includes: determining whether a preemptive instance resource matching a preset resource preemption policy exists in the resource pool; if so, creating a preemptive instance node in the resource pool as the second node; and adding the second node to the distributed training group.

In some exemplary embodiments, the method further includes: creating at least one on-demand instance node in the resource pool as the second node based on a training task amount of the worker process if the preemptive instance resource matching the preset resource preemption policy does not exist in the resource pool; and adding the second node to the distributed training group.

In some exemplary embodiments, the manner of the controlling the distributed training group to perform elastic scale-out on the training task based on a use state of the at least one preemptive instance node and/or availability of preemptive instance resources in the resource pool includes: creating a third node in the resource pool if the preemptive instance resources in the resource pool satisfy a preset resource preemption policy, where the third node is a preemptive instance node; and adding the third node to the distributed training group, and triggering the distributed training group to perform elastic scale-out, to re-allocate the training task based on the distributed training group added with the node.

In some exemplary embodiments, the method further includes: monitoring a reclaim event of the preemptive instance nodes in the resource pool; and determining, if it is monitored that any preemptive instance node in the resource pool is reclaimed, that a use state of the preemptive instance node is an unavailable state.

In this embodiment, the distributed training group executes the training task based on the elastic training framework, so that the worker process of the training task may be run on the instance node of the distributed training group. Because the elastic training framework supports a dynamic change of the worker process of the training task, the training process supports a dynamic quantity change of distributed nodes required for the training. Based on this, when the distributed training group includes a preemptive instance node, elastic scale-out or elastic scale-in may be performed on the training task with reference to states of the preemptive instance node. Further, training may be performed by fully using the preemptive instance, to reduce training costs while enabling the training task to automatically perform scale-out or scale-in instead of terminating, thereby facilitating improvement of training quality and training efficiency.

It is to be noted that the steps of the method provided in the foregoing embodiments may be performed by the same device, or the method may be performed by different devices. For example, step 401 to step 404 may be performed by a device A. For another example, steps 401 and 402 may be performed by a device A, and step 403 may be executed by a device B; and so on.

In addition, some processes described in the foregoing embodiments and the drawings include at least one operation that appears in a specific sequence. However, it should be clearly understood that the operations may not be performed in the sequence in which the operations appear in this specification or be performed in parallel. Sequence numbers of the operations, such as 401 and 402, are merely used for distinguishing between different operations, and do not indicate any execution sequence. In addition, the processes may include more or fewer operations, and the operations may be performed in sequence or in parallel. It is to be noted that descriptions such as "first" and "second" in this specification are used for distinguishing between different messages, devices, modules, and the like, and neither indicate a sequence nor indicate that "first" and "second" are different types.

It is to be noted that user information (including but not limited to user device information and user personal information) and data (including but not limited to data for analysis, stored data, and displayed data) in this application are all information and data authorized by a user or fully authorized by all parties, and collection, use, and processing of relevant data need to comply with relevant laws, regulations, and standards of relevant countries and regions. Corresponding operation entries are provided for a user to authorize or reject.

FIG. 5 is a schematic structural diagram of a server according to an exemplary embodiment of this application. The server is applicable to the training system provided in the foregoing embodiment. As shown in FIG. 5, the server includes a memory 501, a processor 502, and a communication component 503.

The memory 501 is configured to store a computer program, and may be configured to store various other data to support operations on the server. Examples of the data include instructions of any application program or method to be operated on the server.

The processor 502 is coupled to the memory 501, and is configured to execute the computer program in the memory 501, so as to: receive a training task, and obtain a work type corresponding to the training task; schedule the training task to a distributed training group corresponding to the work type to perform training, where the distributed training group is used to execute the training task based on an elastic training framework corresponding to the work type, and the distributed training group includes at least one preemptive instance node in a resource pool; and control the distributed training group to perform elastic scale-out or elastic scale-in on the training task based on a use state of the at least one preemptive instance node and/or availability of preemptive instance resources in the resource pool.

In some exemplary embodiments, when performing elastic scale-in on the training task in the distributed training group based on the use state of the at least one preemptive instance node and/or the availability of preemptive instance resources in the resource pool, the processor 502 is specifically configured to: trigger the distributed training group to perform elastic scale-in if a first node in the at least one preemptive instance node is updated to an unavailable state, to re-allocate the training task based on remaining available nodes in the distributed training group.

In some exemplary embodiments, the processor 502 is further configured to: determine whether to restart a worker process on the first node based on preset training configuration information; and if so, restart the worker process, and set the worker process to a pending state. Correspondingly, when controlling the distributed training group to perform elastic scale-out on the training task based on the use state of the at least one preemptive instance node and/or the availability of preemptive instance resources in the resource pool, the processor 502 is specifically configured to: add a second node to the distributed training group, to recover the worker process from the pending state to a running state; and trigger the distributed training group to perform elastic scale-out, so that the worker process is run on the added second node.

In some exemplary embodiments, when adding the second node to the distributed training group, the processor 502 is specifically configured to: determine whether a preemptive instance resource matching a preset resource preemption policy exists in the resource pool; if so, create a preemptive instance node in the resource pool as the second node; and add the second node to the distributed training group.

In some exemplary embodiments, the processor 502 is further configured to: create at least one on-demand instance node in the resource pool as the second node based on a training task amount of the worker process if the preemptive instance resource matching the preset resource preemption policy does not exist in the resource pool; and add the second node to the distributed training group.

In some exemplary embodiments, when controlling the distributed training group to perform elastic scale-out on the training task based on the use state of the at least one preemptive instance node and/or the availability of preemptive instance resources in the resource pool, the processor 502 is specifically configured to: create a third node in the resource pool if the preemptive instance resources in the resource pool satisfy a preset resource preemption policy, where the third node is a preemptive instance node; and add the third node to the distributed training group, and trigger the distributed training group to perform elastic scale-out, to re-allocate the training task based on the distributed training group added with the node.

In some exemplary embodiments, the processor 502 is further configured to: monitor a reclaim event of the preemptive instance nodes in the resource pool; and determine, if it is monitored that any preemptive instance node in the resource pool is reclaimed, that a use state of the preemptive instance node is an unavailable state.

Further, as shown in FIG. 5, the server further includes a power supply component 504 and the like. Although only some of the components are exemplified in FIG. 5, it does not mean that the server includes only the components shown in FIG. 5.

The memory 501 may be implemented by any type of volatile or non-volatile storage device or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The communication component 503 is configured to facilitate wired or wireless communication between a device in which the communication component is located and another device. The device in which the communication component is located may connect to a wireless network based on a communication standard, such as Wi-Fi (a wireless network communication technology), 2G (such as a global system for mobile communications (GSM)), 3G (such as wideband code division multiple access (WCDMA)), 4G (such as long term evolution (LTE)), 4G + (such as LTE-Advanced (LTE-A)), or 5G (such as a 5th generation mobile communication technology), or a combination thereof. In an exemplary embodiment, the communication component receives a broadcast signal or broadcast-related information from an external broadcast management system through a broadcast channel. In an exemplary embodiment, the communication component may be implemented based on a near field communication (NFC) technology, a radio frequency identification (RFID) technology, an infrared data association (IrDA) technology, an ultra wide band (UWB) technology, a bluetooth (BT) technology, and other technologies.

The power supply component 504 is configured to provide power to various components of a device in which the power supply component is located. The power supply component may include a power supply management system, one or more power supplies, and other components associated with generation, management, and power distribution for the device in which the power supply component is located.

In this embodiment, the distributed training group executes the training task based on the elastic training framework, so that the worker process of the training task may be run on the instance node of the distributed training group. Because the elastic training framework supports a dynamic change of the worker process of the training task, the training process supports a dynamic quantity change of distributed nodes required for the training. Based on this, when the distributed training group includes a preemptive instance node, elastic scale-out or elastic scale-in may be performed on the training task with reference to states of the preemptive instance node. Further, training may be performed by fully using the preemptive instance, to reduce training costs while enabling the training task to automatically perform scale-out or scale-in instead of terminating, thereby facilitating improvement of training quality and training efficiency.

Correspondingly, an embodiment of this application further provides a computer-readable storage medium storing a computer program. The computer program, when executed, can implement the steps that may be executed by the server in the foregoing method embodiments.

A person skilled in the art should understand that the embodiments of the present invention may be provided as a method, a system, or a computer program product. Therefore, the present invention may use a form of hardware-only embodiments, software-only embodiments, or a combination of software and hardware embodiments. In addition, the present invention may use a form of a computer program product that is implemented on one or more computer-usable storage media (including but not limited to a disk memory, a compact disc read-only memory (CD-ROM), and an optical memory) that include computer-usable program code.

The present invention is described with reference to the flowcharts and/or block diagrams of the method, the device (system), and the computer program product according to the embodiments of the present invention. It should be understood that processes and/or blocks in the flowcharts and/or block diagrams and a combination of processes and/or blocks in the flowcharts and/or block diagrams may be implemented by computer program instructions. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can direct the computer or the another programmable data processing device to operate in a specific manner, so that the instructions stored in the computer-readable memory generate a product that includes an instruction apparatus. The instruction apparatus implements functions specified in one or more processes in the flowcharts and/or in one or more blocks in the block diagrams.

These computer program instructions may also be loaded onto the computer or the another programmable data processing device, so that a series of operations and steps are performed on the computer or the another programmable device to generate computer-implemented processing, and the instructions executed on the computer or the another programmable device provide steps for implementing the functions specified in one or more processes in the flowcharts and/or one or more blocks in the block diagrams.

In a typical configuration, a computing device includes one or more CPUs, an input/output interface, a network interface, and a memory.

The memory may include forms such as a non-permanent memory in a computer-readable medium, a random access memory (RAM), and/or a non-volatile memory, for example, a ROM, or a flash memory (a flash RAM). The memory is an example of the computer-readable medium.

The computer-readable medium includes both permanent and non-permanent, removable and non-removable media, which can implement information storage by using any method or technology. The information may be a computer-readable instruction, a data structure, a module of a program, or other data. Examples of a storage medium of a computer include but are not limited to a parallel random access machine (PRAM), a static random access memory (SRAM), a dynamic random access memory (DRAM), another type of RAM, a ROM, an EEPROM, a flash memory or another memory technology, a CD-ROM, a digital video disk (DVD) or another optical storage, a magnetic cassette tape, a magnetic disk memory or another magnetic storage device, or any other non-transmission medium, which may be configured to store information accessible by a computing device. As defined herein, the computer-readable medium does not include a transitory computer-readable medium (transitory media), such as a modulated data signal and a carrier.

It should be further noted that the term "comprise", "include", or any other variant is intended to encompass non-exclusive inclusion, such that a process, a method, a commodity, or a device including a series of elements not only includes those elements, but also includes other elements not listed explicitly, or includes intrinsic elements of the process, the method, the commodity, or the device. Without more limitations, an element defined by a statement "include a/an..." does not exclude additional same elements existing in the process, the method, the commodity, or the device that includes the element.

The foregoing descriptions are merely embodiments of this application and are not intended to limit this application. For a person skilled in the art, various modifications and variations may be made to this application. Any modification, equivalent replacement, and improvement made within the spirit and principle of this application shall fall within the scope of the claims of this application.

## Claims

1. A training method, comprising:
receiving a training task, and obtaining a work type corresponding to the training task;
scheduling the training task to a distributed training group corresponding to the work type to perform training, wherein the distributed training group is used to execute the training task based on an elastic training framework corresponding to the work type, and the distributed training group comprises at least one preemptive instance node in a resource pool; and
controlling the distributed training group to perform elastic scale-out or elastic scale-in on the training task based on a use state of the at least one preemptive instance node and/or availability of preemptive instance resources in the resource pool.

2. The method according to claim 1, wherein the performing elastic scale-in on the training task in the distributed training group based on a use state of the at least one preemptive instance node and/or availability of preemptive instance resources in the resource pool comprises:
triggering the distributed training group to perform elastic scale-in if a first node in the at least one preemptive instance node is updated to an unavailable state, to re-allocate the training task based on remaining available nodes in the distributed training group.

3. The method according to claim 2, further comprising:
determining whether to restart a worker process on the first node based on preset training configuration information; and
if so, restarting the worker process, and setting the worker process to a pending state; and
the controlling the distributed training group to perform elastic scale-out on the training task based on a use state of the at least one preemptive instance node and/or availability of preemptive instance resources in the resource pool comprises:
adding a second node to the distributed training group, to recover the worker process from the pending state to a running state; and
triggering the distributed training group to perform elastic scale-out, so that the worker process is run on the added second node.

4. The method according to claim 3, wherein the adding a second node to the distributed training group comprises:
determining whether a preemptive instance resource matching a preset resource preemption policy exists in the resource pool;
if so, creating a preemptive instance node in the resource pool as the second node; and
adding the second node to the distributed training group.

5. The method according to claim 4, further comprising:
creating at least one on-demand instance node in the resource pool as the second node based on a training task amount of the worker process if the preemptive instance resource matching the preset resource preemption policy does not exist in the resource pool; and
adding the second node to the distributed training group.

6. The method according to any one of claims 1 to 5, wherein the controlling the distributed training group to perform elastic scale-out on the training task based on a use state of the at least one preemptive instance node and/or availability of preemptive instance resources in the resource pool comprises:
creating a third node in the resource pool if the preemptive instance resources in the resource pool satisfy a preset resource preemption policy, wherein the third node is a preemptive instance node; and
adding the third node to the distributed training group, and triggering the distributed training group to perform elastic scale-out, to re-allocate the training task based on the distributed training group added with the node.

7. The method according to any one of claims 1 to 5, further comprising:
monitoring a reclaim event of the preemptive instance nodes in the resource pool; and
determining, if it is monitored that any preemptive instance node in the resource pool is reclaimed, that a use state of the preemptive instance node is an unavailable state.

8. A training system, comprising:
an elastic training control component, a scheduling decision maker, an elastic scale-out and scale-in component, and a distributed training group,
wherein the distributed training group comprises at least one preemptive instance node in a resource pool; and
the elastic training control component is configured to: receive a training task, and obtain a work type corresponding to the training task; schedule the training task to a distributed training group corresponding to the work type by using the scheduling decision maker, so that the distributed training group executes the training task based on an elastic training framework corresponding to the work type; and control, by using the elastic scale-out and scale-in component, the distributed training group to perform elastic scale-out or elastic scale-in on the training task based on a use state of the at least one preemptive instance node and/or availability of preemptive instance resources in the resource pool.

9. A server, comprising a memory and a processor,
wherein the memory is configured to store one or more computer instructions; and
the processor is configured to execute the one or more computer instructions to perform the steps of the method according to any one of claims 1 to 8.

10. A computer-readable storage medium, storing a computer program, wherein the computer program, when executed by a processor, implements the training method according to any one of claims 1 to 8.
